# EUROPÄISCHE PATENTSCHRIFT

(11) **EP 1 133 814 B1**
(45) Veröffentlichungstag und Bekanntmachung des Hinweises auf die Patenterteilung: **19.06.2002**
(21) Anmeldenummer: 99952571.0
(22) Anmeldetag: 14.10.1999
(51) Int. Cl.: H01R 13/658

(54) **ABSCHIRMEINRICHTUNG FÜR ANSCHLUSSLEISTEN DER TELEKOMMUNIKATIONS- UND DATENTECHNIK**
SCREENING DEVICE FOR STRIP TERMINALS IN TELECOMMUNICATIONS AND DATA TECHNIQUES
DISPOSITIF DE BLINDAGE POUR PLAQUETTES A BORNES UTILISEES DANS LE DOMAINE DES TELECOMMUNICATIONS ET DE L'INFORMATIQUE

(30) Priorität: 23.11.1998 DE 19853837
(43) Veröffentlichungstag der Anmeldung: 19.09.2001
(73) Patentinhaber: KRONE GmbH, 14167 Berlin (DE)
(72) Erfinder: BIPPUS, Hans-Dieter, Holgate, NSW 2250 (AU); NICHOLLS, Bryce, Lindsay, Avoca Beach, NSW 2251 (AU)
(86) Internationale Anmeldenummer: EP9907756
(87) Internationale Veröffentlichungsnummer: WO0031837

(56) Entgegenhaltungen:
- EP-A- 0 563 942
- EP-A- 0 766 352
- US-A- 5 160 273

## Beschreibung

Die Erfindung bezieht sich auf eine Abschirmeinrichtung für Anschlußleisten der Telekommunikations- und Datentechnik, aus mehreren Abschirmblechen und mindestens einer diesen zugeordneten Basisschiene (siehe als Beispiel des Dokument EP-A- 0 563 942, insbesondere die Figure 3).

Eine Abschirmeinrichtung der gattungsgemäßen Art ist auch aus der Anschlußleiste nach US-A- 5,160,273 vorbekannt. Hierbei wird das Problem des Über- bzw. Nebensprechens zwischen benachbarten Schneidklemm-Kontaktelementen der Anschlußleiste durch Einsetzen einer Vielzahl elektrisch leitfähiger Abschirmbleche zwischen die einzelnen Paare von Schneidklemm-Kontaktelementen gelöst. Das Problem des Über- bzw. Nebensprechens tritt bei der Übertragung großer Informationsvolumen über elektrische Leitungen auf,wobei die Informationen bei hohen Frequenzen übertragen werden. Die Übertragung bei hohen Frequenzen erzeugt eine Strahlung und eine Interferenz zwischen benachbarten Leitungen, insbesondere wenn diese Leitungen eng benachbart zueinander in der Anschlußleiste angeordnet sind. Zwischen einem Paar von Schneiklemm-Kontaktelementen sind elektrisch leitfähige Schirmbleche eingesetzt, wobei der Abstand zweier benachbarter Paare von Schneiklemm-Kontakt'elementen größer ist, als der Abstand zwischen benachbarten Schneiklemm-Kontaktelementen eines Paares. Die Abschirmbleche sind dabei zwischen Paaren von Schneidklemm-Kontaktelementen in sich quer zur Längsrichtung des Kunststoffkörpers der Anschlußleiste erstreckende Schlitze eingeschoben und kontaktieren die sich in Längsrichtung innerhalb des Kunststoffkörpers befindliche Basisschiene. Nachteilig hierbei ist, daß bei der Montage in den Kunststoffkörper zunächst die Basisschiene eingebaut werden muß, die Kontaktzungen zur Kontaktierung der einzelnen Abschirmbleche aufweist, und daß anschließend die einzelnen Abschirmbleche in die Anschlußleiste eingeschoben werden müssen. Hierdurch ist der Montageaufwand relativ groß, um die Anschlußleiste für hohe Übertragungsraten in der Telekommunikations- und Datentechnik mit der Abschirmeinrichtung zu versehen.

Der Erfindung liegt von daher die Aufgabe zugrunde, die Abschirmeinrichtung der gattungsgemäßen Art zwecks Vereinfachung der Montage zu verbessern.

Zur Lösung dieser Aufgabe sieht die Erfindung vor, daß die Abschirmbleche und die Basisschiene einstückig aus einem Metallblech ausgeformt sind und jedes Abschirmblech über einen schmalen Steg mit der Basisschiene verbunden und um etwa 90° gegenüber der Basisschiene verdreht angeordnet ist. Ein Metallblech im Sinne der Erfindung kann sowohl ein massives Metallblech als auch ein metallisiertes Kunststoffband od.dgl. sein. Die erfindungsgemäße Abschirmeinrichtung bildet somit ein einstückiges Bauteil aus metallischem Werkstoff, das bei der Montage einer Anschlußleiste für die Telekommunikations- und Datentechnik in das Kunststoffgehäuse der Anschlußleiste mit seiner Basisschiene eingesteckt wird und dessen einstückig mit der Basisschiene verbundene Abschirmbleche gleichzeitig in alle vorgeformten Schlitze innerhalb der Anschlußleiste eingeführt werden. Hierdurch wird eine wesentliche Montagevereinfachung erreicht.

In weiterer Ausbildung der Erfindung sind die Abstände der Abschirmbleche einer Basisschiene unterschiedlich zueinander ausbildbar.Hierdurch kann das Abschirmblech an unterschiedliche Anwendungsfälle angepaßt werden.

Die Erfindung bezieht sich ferner auf ein Verfahren zur Herstellung der Abschirmeinrichtung gemäß dem Patentanspruch 3, auf eine Anschlußleiste für die Abschirmeinrichtung gemäß Patentanspruch 5 sowie schließlich auf die Verwendung der Abschirmeinrichtung innerhalb einer Anschlußleiste gemäß Patentanspruch 6.

Die Erfindung ist nachfolgend anhand eines in den Zeichnungen näher dargestellten Ausführungsbeispieles einer in eine Anschlußleiste für die Telekommunikations- und Datentechnik einbaubaren bzw. eingebauten Abschirmeinrichtung näher erläutert. Es zeigen:

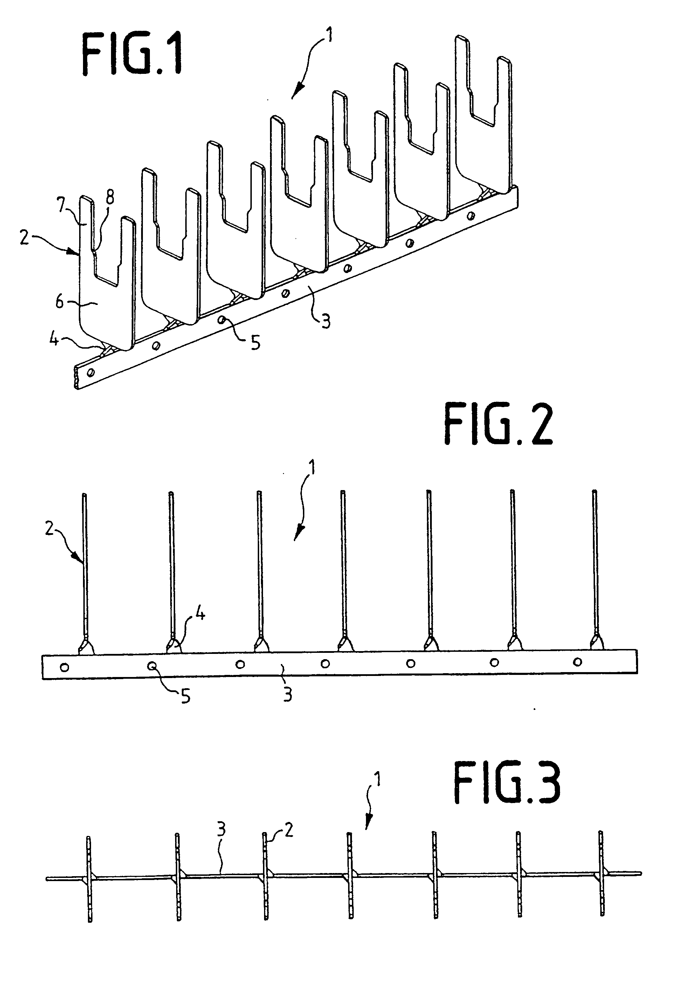

- Fig. 1: eine perspektivische Darstellung der Abschirmeinrichtung,
- Fig. 2: eine Vorderansicht,
- Fig. 3: eine Draufsicht,
- Fig. 4: die Draufsicht auf ein Metallblech mit ausgestanzten Abschirmblechen und der Basisschiene,
- Fig. 5: eine der Fig.4 entsprechende Darstellung eines Teils der Abschirmeinrichtung mit gefalteter Basisschiene,
- Fig. 6: eine Seitenansicht einer Anschlußleiste,
- Fig. 7: einen Querschnitt gemäß der Linie A-A in Fig. 6,
- Fig. 8: eine Draufsicht auf die Anschlußleiste gemäß Fig. 6 und
- Fig. 9: einen Querschnitt gemäß der Linie B-B in Fig. 8.

Die Abschirmeinrichtung 1 besteht im Ausführungsbeispiel aus sieben flachen, im wesentlichen U-förmigen Abschirmblechen 2, einer Basisschiene 3 sowie sieben Verbindungsstegen 4, die die einzelnen Abschirmbleche 2 mit der Basisschiene 3 verbinden. Die Abschirmeinrichtung 1 besteht aus leitfähigem metallischen Material und ist mit den Abschirmblechen 2, der Basisschiene 3 und den Verbindungsstegen 4 einstückig aus einem Metallblech 28, insbesondere Kupfer, Kupferlegierungen, Stahl oder Aluminium ausgeformt, insbesondere ausgestanzt, wobei die Abschirmbleche 2 und die Basisschiene 3 mit den Verbindungsstegen 4 zunächst in der Ebene des Metallbleches 28 liegen. In einem dem Ausschneidevorgang nachfolgenden Arbeitsschritt werden die einzelnen Abschirmbleche 2 im Bereich ihrer Verbindungsstege 4 um 90° gegenüber der Basisschiene 3 verdreht. Jedem Abschirmblech 2 ist nahe dem Verbindungssteg 4 in der Basisschiene 3 ein Loch 5 zugeordnet, das der Justierung beim Herstellungsvorgang dient. Das Metallblech 28 kann auch ein metallisiertes Kunststoffband od.dgl. sein.

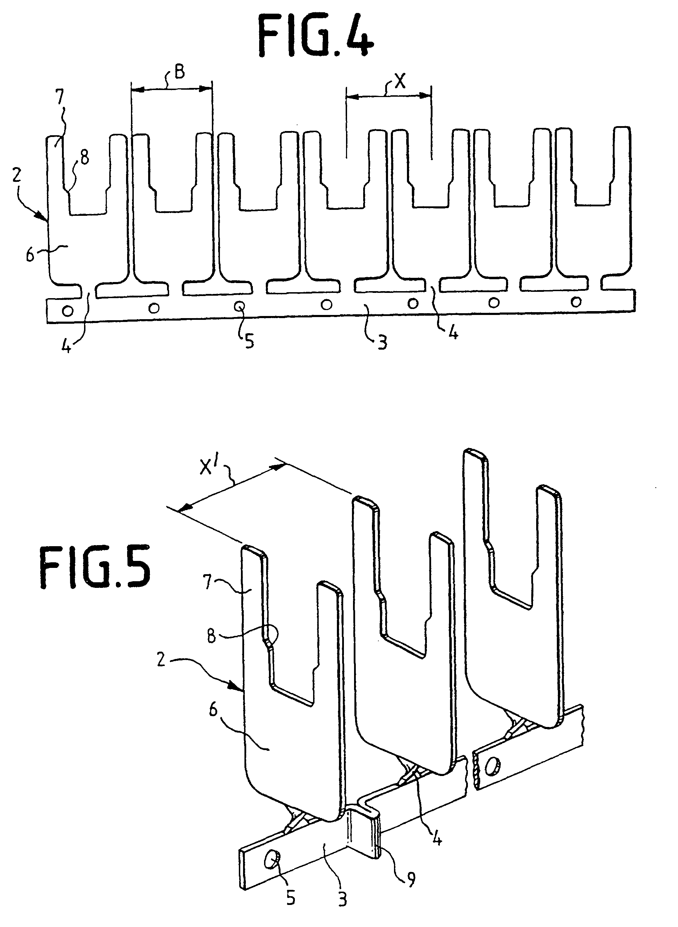

Die einzelnen Abschirmbleche 2 sind in der Ansicht der Abwicklung der Abschirmeinrichtung 1 gemäß Fig. 4 U-förmig ausgebildet, wobei eine etwa rechteckförmige Abschirmplatte 6 an den Verbindungssteg 4 anschließt und an dem Verbindungssteg 4 abgewandten Ende mit zwei zinkenartigen Abschirmgabeln 7 versehen ist. Diese sind mittels eines den Querschnitt verjüngenden Absatzes 8 abgesetzt, um an den Innenquerschnitt der Anschlußleiste 11 angepaßt zu sein.

Die Fig. 4 zeigt das Metallblech 28 mit ausgeschnittenen bzw. ausgestanzten Abschirmblechen 2 der Breite B mit dem mittleren Abstand X voneinander und mit der ausgeschnittenen bzw. ausgestanzten Basisschiene 3 mit den Löchern 5, die der Justierung beim Herstellen dienen. Die Länge des Metallbleches 28 entspricht der Anzahl der Abschirmbleche 2 der Breite B zuzüglich der Schnittfugen.

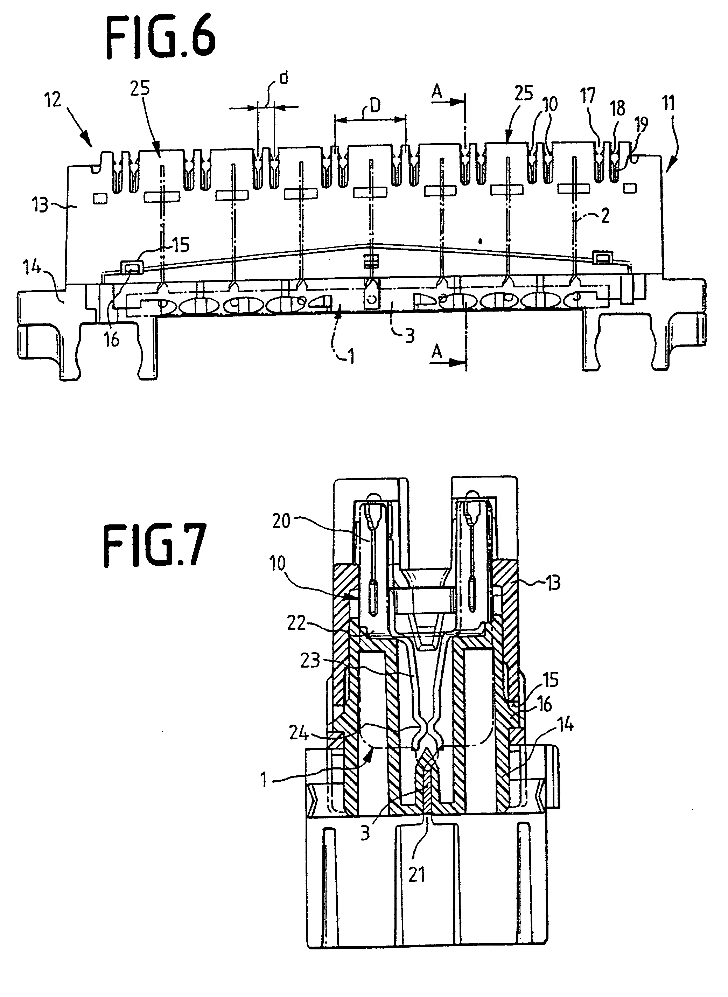

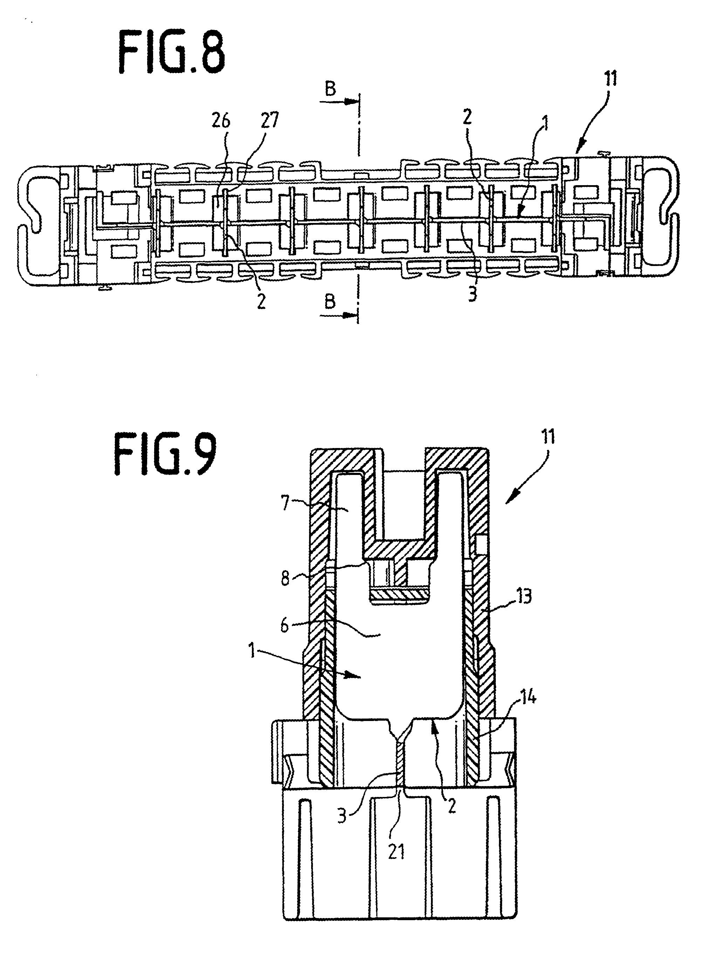

Die Fig. 5 zeigt die um 90° gegenüber der Basisschiene 3 gedrehten Abschirmbleche 2, die im Normalfall den Abstand'X voneinander haben. Um einen geringeren Abstand X' zu erreichen, wird in den Basissteg 3 eine Falte 9 eingebracht, wie es in Fig. 8 dargestellt ist.

Die Abschirmeinrichtung 1 dient zur Abschirmung der einzelnen Schneidklemm-Kontaktelemente 10 innerhalb einer Anschlußleiste 11 für hohe Übertragungsraten in der Telekommunikations- und Datentechnik. Eine solche Anschlußleiste 11 mit einer Mehrzahl von paarweise angeordneten Schneidklemm-Kontaktelementen 10 ist in der DE 43 25 952 C2 dargestellt und näher beschrieben. Die Anschlußleiste 11 ist in den Figuren 6 bis 9 dargestellt und wird nachfolgend im Hinblick auf die eingesetzte Abschirmeinrichtung 1 näher beschrieben.

Die Anschlußleiste 11 umfaßt ein Kunststoffgehäuse 12 aus Oberteil 13 und Unterteil 14, die durch Rastöffnungen 15 im Oberteil 13 und Rastnasen 16 im Unterteil 14 miteinander verastet sind. In das Oberteil 13 sind Klemmschlitze 17 mit angeformten Klemmnasen 18 und Klemmstege 19 eingeformt,die zur Aufnahme der Schneidklemm-Kontaktelemente 10 dienen. Diese sind aus blattförmigen Flachmaterial gebildet und umfassen zwei einen Kontaktschlitz 20 zwischen sich einschließende Kontaktstege 21. An einen Basissteg 22 schließen sich Kontaktfinger 23 an, die in Federkontakte 24 übergehen. Es sind jeweils zwei Paare von Schneidklemm-Kontaktelementen 10 dicht benachbart angeordnet, wobei der Abstand D zwischen zwei benachbarten Paaren von Schneidklemm-Kontaktelementen 10 wesentlich größer ist als der Abstand d dicht benachbarter Schneidklemm-Kontaktelemente 10, wie es in Fig. 6 ersichtlich ist. In diefinsgesamt sieben breiteren Querschnittsbereichen 25 der Anschlußleiste 11 sind die einzelnen Abschirmbleche 2 der Abschirmeinrichtung 1 eingesetzt, wie es in den Figuren 6 und 7 gestrichelt und in Fig. 8 und 9 in ausgezogenen Linien dargestellt ist.

Zum Einsetzen der Basisschiene 3 mit den einzelnen Abschirmblechen 2 in das Gehäuse 12 der Anschlußleiste 11 sind im Ausführungsbeispiel im Oberteil 13 sieben Kammern 26 mit jeweiligen Querschlitzen 27 eingebracht, in welche die einzelnen Abschirmbleche 2 eingeschoben sind. Die Basisschiene 3 befindet sich in einem Längsschlitz 21 im Bodenbereich des Unterteiles 14, wie es in Fig. 7 und 9 dargestellt ist. Die einzelnen Abschirmbleche 2 füllen mit ihren Abschirmplatten 6 und daran anschließenden Abschirmgabeln 7 im wesentlichen den Querschnitt des Innenraumes der Anschlußleiste 11 voll aus, wie es insbesondere in Fig. 9 dargestellt ist, und trennen somit die einzelnen Paare von Schneidklemm-Kontaktelementen 10 derart, daß durch die elektrisch leitfähigen Abschirmbleche 2 eine größere Über- bzw.Nebensprechdämpfung bei hohen Übertragungsraten erzielt wird. Der Einsatz der großflächigen, elektrisch leitfähigen Abschirmbleche 2 in der Anschlußleiste 11 erfordert keine Vergrößerung des Bauvolumens der Anschlußleiste 11 und keinen höheren Kostenaufwand bei deren Herstellung.

Für die Abschirmeinrichtung 1 ist keine Erdung erforderlich. Wesentlich ist nur, daß die einzelnen Abschirmbleche 2 miteinander in leitfähiger Verbindung stehen. Dies erfolgt über die allen Abschirmblechen 2 gemeinsame Basisschiene 3. Die Abschirmbleche 2 beeinflussen das elektrische Feld derart, daß die Influenzladung eines Schneidklemm-Kontaktelementes 10 im benachbarten Schneidklemm-Kontaktelement 10 reduziert wird und dadurch eine geringe Störspannung auftritt. Hierdurch entsteht ein größeres Signalrauschverhältnis. Der Rauschabstand wird größer, so daß größere Frequenzen übertragen werden können, ohne daß sich die nebeneinander angeordneten Leitungen der Schneidklemm-Kontaktelemente 10 störend beeinflussen.

Die Anzahl der Abschirmbleche 2 einer Abschirmeinrichtung 1 richtet sich nach der Anzahl der Paare von Schneidklemm-Kontaktelementen 10. Im Ausführungsbeispiel ist ein 8-paariges Modul dargestellt, das sieben Kammern 26 für insgesamt sieben Abschirmbleche 2 aufweist. Gebräuchliche Paarungen sind 4/3, 8/7, 10/9, 12/11, 16/15, 20/19, 24/23 und 25/24, wobei jeweils die Anzahl an Paaren von Schneidklemm-Kontaktelementen 10 und die Anzahl an Abschirmblechen 2 angegeben ist.

Für eine HIGHBAND 8-Anschlußleiste 11 beträgt der Standard-Abstand X zwischen den Abschirmblechen 2 X = 12,6 mm. Jedoch z.B. für eine HIGHBAND 10-Anschlußleiste 11 beträgt der Abstand X' = 9,6 mm. Hierzu werden die Falten 9 jeweils zwischen die einzelnen Abschirmbleche 2 in die Basisschiene 3 eingebracht. Dieser Abstand kann durch unmittelbares Herausstanzen der Abschirmeinrichtung 1 aus einem Metallblech 28 nicht erreicht werden, da die Breite B des einzelnen Abschirmbleches 2 wegen der Breite der Anschlußleiste 11 etwa 12 mm betragen muß. Die Maße Breite'B = 12,6 mm und Abstand X = 12,6 mm passen somit für eine HIGHBAND 8-Anschlußleiste 11 gut zusammen. Bei einem schmaleren Abstand X, sind jedoch Falten 9 erforderlich, wobei an deren Stelle jede andere Art der Verkürzung der Länge der Basisschiene 3 treten kann.

## Patentansprüche

1. Abschirmeinrichtung für Anschlußleisten der Telekommunikations- und Datentechnik, aus mehreren Abschirmblechen und mindestens einer diesen zugeordneten Basisschiene,
**dadurch gekennzeichnet,**
**daß** die Abschirmbleche (2) und die Basisschiene (3) einstückig aus einem Metallblech (28) ausgeformt sind und daß jedes Abschirmblech (2) über einen schmalen Steg (4) mit der Basisschiene (3) verbunden und um etwa 90° gegenüber der Basisschiene (3) verdreht zu dieser angeordnet ist.

2. Abschirmeinrichtung nach Anspruch 1, **dadurch gekennzeichnet, daß** die Abstände (X,X') zwischen den Abschirmblechen (2) insbesondere durch Falten (9) in der Basisschiene (3) unterschiedlich ausbildbar sind.

3. Verfahren zur Herstellung einer Abschirmeinrichtung für Anschlußleisten der Telekommunikations- und Datentechnik nach Anspruch 1 oder 2,
**dadurch gekennzeichnet,**
**daß** mehrere Abschirmbleche (2) und eine diese tragende Basisschiene (3) sowie die Abschirmbleche (2) mit der Basisschiene (3) verbindende Stege (4) einstückig aus einem Metallblech (28) ausgeformt und anschließend die Abschirmbleche (2) im Bereich der Stege (4) um etwa 90° gegenüber der Basisschiene (3) verdreht werden.

4. Verfahren nach nach Anspruch 3, **dadurch gekennzeichnet, daß** die Abstände (X,X') zwischen den Abschirmblechen (2) insbesondere durch Falten (9) der Basisschiene (3) unterschiedlich ausbildbar sind.

5. Anschlußleiste für die Telekommunikations- und Datentechnik, mit in einem Kunststoffgehäuse angeordneten Schneidklemmkontaktelementen und zwischen diesen angeordneten Abschirmblechen und mindestens einer diesen zugeordneten Erdschiene,
**dadurch gekennzeichnet,**
**daß** die Abschirmbleche (2) und die Basisschiene (3) einstückig aus einem Metallblech (28) ausgeformt sind und daß jedes Abschirmblech (2) über einen schmalen Steg (4) mit der Basisschiene (3) verbunden und um 90° gegenüber der Basisschiene (3) verdreht angeordnet ist.

6. Verwendung einer Abschirmeinrichtung (1) aus einer Basisschiene (3) und einstückig an diese angeformten, durch einen Steg (4) mit der Basisschiene verbundenen und in Bereich der Stege um 90° gegenüber der Basisschiene (3) verdrehten Abschirmblechen (2) als Abschirmung innerhalb einer Anschlußleiste (11) für hohe Übertragungsraten in der Telekommunikations- und Datentechnik.

## Claims

1. Shielding device for connection strips in telecommunications and data engineering, comprising a number of shielding plates and at least one base rail allocated to the latter, **characterized in that** the shielding plates (2) and the base rail (3) are integrally formed from a metal sheet (28), and **in that** each shielding plate (2) is connected to the base rail (3) via a narrow web (4) and is arranged rotated through approximately 90° with respect to the base rail (3).

2. Shielding device according to Claim 1, **characterized in that** the spacings (X, X') between the shielding plates (2) can be designed differently, particularly by means of folds (9) in the base rail (3).

3. Method of producing a shielding device for connection strips in telecommunications and data engineering according to Claim 1 or 2, **characterized in that** a number of shielding plates (2) and a base rail (3) supporting the latter, as well as webs (4) connecting the shielding plates (2) to the base rail (3), are integrally formed from a metal sheet (28), and the shielding plates (2) are subsequently rotated in the region of the webs (4) through approximately 90° with respect to the base rail (3).

4. Method according to Claim 3, **characterized in that** the spacings (X, X') between the shielding plates (2) can be designed differently, particularly by means of folds (9) in the base rail (3).

5. Connection strip for telecommunications and data engineering, having insulation-piercing terminal contact elements arranged in a plastic housing, and shielding plates arranged between said insulation-piercing terminal contact elements, and at least one ground rail allocated to said shielding plates, **characterized in that** the shielding plates (2) and the base rail (3) are integrally formed from a metal sheet (28), and **in that** each shielding plate (2) is connected to the base rail (3) via a narrow web (4) and is arranged rotated through 90° with respect to the base rail (3).

6. Use of a shielding device (1), comprising a base rail (3) and shielding plates (2) which are integrally formed on the latter, are connected to the base rail by means of a web (4) and, in the region of the webs, are rotated through 90° with respect to the base rail (3), as shielding inside a connection strip (11) for high transmission rates in telecommunications and data engineering.

## Revendications

1. Dispositif de blindage pour barrettes de connexion dans le domaine des télécommunications et de l'informatique, constitué de plusieurs tôles de blindage et d'au moins un rail de base affecté à ce dernier, **caractérisé en ce que** les tôles de blindage (2) et le rail de base (3) sont formés en une seule pièce à partir d'une tôle métallique (28), et **en ce que** chaque tôle de blindage (2) est connectée au rail de base (3) via une âme étroite (4) et est disposée en torsion sur environ 90° par rapport au rail de base (3).

2. Dispositif de blindage selon la revendication 1, **caractérisé en ce que** les espacements (X, X') entre les tôles de blindage (2) peuvent être conçus différemment, en particulier au moyen de plis (9) dans le rail de base (3).

3. Procédé pour fabriquer un dispositif de blindage pour barrettes de connexion dans le domaine des télécommunications et de l'informatique selon les revendications 1 et 2, **caractérisé en ce que** plusieurs tôles de blindage (2) et un rail de base (3) supportant celles-ci, ainsi que des âmes (4) raccordant les tôles de blindage (2) au rail de base (3), sont formés d'une seule pièce à partir d'une tôle métallique (28), et les tôles de blindage (2) sont ensuite disposées en torsion dans la zone des âmes (4) sur environ 90° par rapport au rail de base (3).

4. Procédé selon la revendication 3, **caractérisé en ce que** les espacements (X, X') entre les tôles de blindage (2) peuvent être conçus différemment, en particulier au moyen de plis (9) dans le rail de base (3).

5. Barrette de connexion dans le domaine des télécommunications et de l'informatique, présentant des éléments de contact autodénudants disposés dans un boîtier en matière synthétique, et des tôles de blindage disposées entre lesdits éléments de contact autodénudants, et au moins un rail de terre affecté auxdites tôles de blindage, **caractérisé en ce que** les tôles de blindage (2) et le rail de base (3) sont formées d'une seule pièce à partir d'une tôle métallique (28), et **en ce que** chaque tôle de blindage (2) est raccordée au rail de base (3) via une âme étroite (4) et est disposée en torsion sur environ 90° par rapport au rail de base (3).

6. Utilisation d'un dispositif de blindage (1), constitué d'un rail de base (3) et de tôles de blindage (2) qui sont formées d'une seule pièce sur ce dernier, sont raccordées par une âme (4) au rail de base et sont disposées en torsion sur environ 90° par rapport au rail de base (3), dans la zone des âmes en tant que blindage à l'intérieur d'une barrette de connexion (11) pour des vitesses de transmission élevées dans le domaine des télécommunications et de l'informatique.
